# EUROPEAN PATENT APPLICATION

(11) **EP 4 417 587 A1**
(43) Date of publication of application: **21.08.2024**
(21) Application number: 23157546.5
(22) Date of filing: 20.02.2023
(51) Int. Cl.: C04B 24/04, C04B 24/06, C04B 28/04

(54) **METHODS FOR THE APPLICATION IN THICK LAYER OF CEMENTITIOUS COMPOSITIONS COMPRISING KINETIC REGULATOR**

(71) Applicant: Sika Technology AG, 6340 Baar (CH)
(72) Inventor: UNSELD, Johannes Otto, 38678 Clausthal-Zellerfeld (DE); MÜLLER, Thomas, 69207 Sandhausen (DE); EROLES, Emmark, Riverstone, NSW 2765 (AU); VOGT, Oliver, 67227 Frankenthal (DE)
(74) Representative: Sika Patent Attorneys

(57) **Abstract**

The present invention relates to methods for the application in thick layer (3) of cementitious compositions (2) in particular for repair, grouting, joining, levelling, rendering, anchoring, additive manufacturing, or casting of construction elements, said cementitious composition comprising a kinetic regulator selected from hydroxy carboxylic acids and their derivatives, especially esters of hydroxy carboxylic acids.

## Description

### Technical Field

The present invention relates to methods for the application in thick layer of cementitious compositions comprising kinetic regulator.

### Background of the invention

It is a well-known phenomenon that cementitious compositions develop and release heat upon hydration. Especially the hydration reaction of cement is exothermic and a considerable amount of energy, often called the heat of hydration, is released upon hydration of cement.

Especially when cementitious compositions are applied in thick layers, the heat release can be significant, and a typical phenomenon is a significant temperature difference between internal and external layers. Another phenomenon related to heat release are changes in the dimensions due to elongation and shrinkage. Also, very high core temperatures can be encountered, such as higher than 60°C or higher than 80 °C, which may lead to formation of metastable hydrate phases. As a consequence, cementitious compositions applied in thick layers have an increased risk of cracking and strength development can be less predictable and sometimes lower than expected. Cracked cementitious compositions have a lower durability and sometimes cracks may even lead to structural failure.

Known measures to counteract this problem include the use of special cements with low heat development, cooling of aggregates, placement of the cementitious composition in several subsequent layers, curing with thermal insulation, active cooling, and design of joints and sections to facilitate heat dissipation. All of these measures require additional steps which can be difficult to realize on a job site and which increase the complexity and cost of a given project considerably.

Retarders for the hydration reaction of cementitious compositions are known. However, known retarders typically inhibit the hydration reaction only for some time or they slow down the hydration reaction. Inhibition normally does not balance the heat release and when hydration finally starts, the full heat of hydration is released. A slowdown of the hydration reactions balances the release of the heat of hydration over a longer time, but also prolongs the time until which a desired degree of curing, often a desired strength, is reached and thus may slow down the whole construction process.

What is needed are and kinetic regulators for cementitious compositions that can control or balance the heat release over the time of curing and methods for the application of cementitious compositions comprising such kinetic regulators. Ideally, such kinetic regulators do not inhibit the start of cement hydration significantly. Additionally, such kinetic regulators do not unduly prolong the curing of cementitious materials.

### Summary of the invention

It is an objective of the present invention to provide methods for the application of cementitious compositions where a cementitious composition is applied in thick layers. It is especially an objective of the present invention to provide methods for the application of cementitious mortars in thick layers. In particular, methods are for repair, grouting, joining, levelling, rendering, anchoring, additive manufacturing, or casting of construction elements.

Surprisingly, the objectives of the present invention could be solved by a method as claimed in claim 1.

It has been found that kinetic regulator selected from hydroxy carboxylic acids and their derivatives, especially esters of hydroxy carboxylic acids, in particular citric acid, citric acid esters, tartaric acid esters, lactic acid esters, gluconic acid esters, malic acid esters, glycolic acid esters, and/or mandelic acid esters, can control or balance the heat release over the time of curing of cementitious compositions. Thereby, for example, the peak in heat flow, or maximum heat flow, from a cementitious composition comprising said kinetic regulator can be reduced by between 10 - 90 % as compared to the same cementitious composition without said kinetic regulator. In particular, the temperature of cementitious compositions applied in thick layers can be controlled to reach not more than 65 °C or less. Such control or balance of the heat release enables the application of cementitious composition in thick layers. In particular, elevated temperatures in the core of cementitious compositions applied in thick layer, and/or temperature differences between internal and external parts are avoided. Thereby the risk of cracking and/or lower strength development is significantly reduced.

Further objects of the present invention are the subject of further independent claims. Advantageous embodiments are the subject of dependent claims.

### Ways for carrying out the invention

In a first aspect the present invention relates to a method for the application of cementitious compositions, said method comprising the steps of
(i) providing a dry cementitious composition comprising at least one binder,
(ii) providing a kinetic regulator selected from hydroxy carboxylic acids and their derivatives, especially esters of hydroxy carboxylic acids,
(iii) providing mixing water,
(iv) mixing said dry cementitious composition, said kinetic regulator, and water to obtain a wet cementitious composition,
   or mixing said dry cementitious composition and said kinetic regulator to prepare a dry premix and mixing said dry premix with water to obtain a wet cementitious composition
(v) applying said wet cementitious composition to a surface in an amount sufficient to create a layer with thickness of at least 5 cm, preferably at least 7.5 cm, more preferably at least 8 cm, still more preferably at least 10 cm, still more preferably at least 15 cm, especially at least 20 cm, and
(vi) optionally curing the applied wet cementitious composition.

Especially, the method of the present invention is a method for that the method is for repair, grouting, joining, levelling, rendering, anchoring, additive manufacturing, or casting of construction elements. A construction element within the present context can be any element that forms part of a construction work such as a building. For example, a construction element can be a wall, a screed, a render, a patch, a joint, a decorative element, an infill, a foundation.

A dry cementitious composition or a dry premix is essentially free of water. Essentially free of water means that the content of water is not more than 5 w%, preferably not more than 1 w%, especially not more than 0.1 w%, relative to the total weight of the dry cementitious composition.

The at least one binder is selected from hydraulic cement, pozzolane, and/or latent hydraulic material. Hydraulic cement can in particular be cement of type CEM I, CEM II, CEM III, CEM IV, and CEM V as described in standard EN 197-1, cement of type CEM VI as described in standard DIN EN 197-5, calcium aluminate cements as described in standard EN 14647, and/or calcium sulphoaluminate cements. Pozzolanes and latent hydraulic materials preferably are selected from the group consisting of slag, especially blast furnace slag or basic oxygen slag, clay, calcined clay, especially metakaolin, kiln dust, microsilica, fly ash, pyrogenic silica, precipitated silica, silica fume, zeolite, rice husk ash, burnt oil shale, and natural pozzolane such as pumice, trass, and finely ground limestone.

It can be preferred that the dry cementitious composition provided in a method of the present invention comprises Portland cement. In particular, the dry cementitious composition comprises a binder having a content of at least 5 w%, preferably at least 20 w%, more preferably at least 35 w%, still more preferably at least 65 w%, especially at least 80 w%, in particular at least 95 w%, relative to the total weight of the binder, of Ordinary Portland clinker.

The kinetic regulator is selected from hydroxy carboxylic acids and their derivatives, especially esters of hydroxy carboxylic acid.

Especially preferred, the kinetic regulator is selected from citric acid, citric acid esters, tartaric acid esters, lactic acid esters, gluconic acid esters, malic acid esters, glycolic acid esters, and/or mandelic acid esters.

According to embodiments, the kinetic regulator is a citric acid ester. Especially, the kinetic regulator is an ester of citric acid with a polyhydric alcohol. Further preferred are mixed esters of citric acid and fatty acids with polyhydric alcohols.

Citric acid within the present context is meant to also encompass isocitric acid.

According to embodiments, the kinetic regulator is an ester of citric acid according to the following general structure (I) 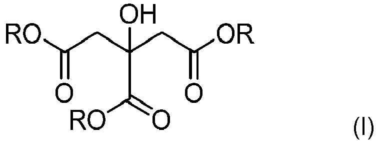 where each R, independently of one another, is H, or a branched or unbranched C2 - C30 alkyl chain, or a branched or unbranched C3 - C30 alkenyl chain, wherein the alkenyl chain may comprise between 1 - 6 double bonds, or a cyclohexyl group, or an aromatic group with 5 - 10 C atoms, with the provision that at least one of R is not H.

It has been found that kinetic regulators of the general structure (I) and with at least one hydrophobic moiety R, are particularly suitable within the present context. Suitable kinetic regulators of the general structure (I) are monobutyl citrate, dibutyl citrate, tributyl citrate, monopentyl citrate, dipentyl citrate, tripentyl citrate, monohexyl citrate, dihexyl citrate, trihexyl citrate, monooleyl citrate, dioleyl citrate, trioleyl citrate, monostearyl citrate, distearyl citrate, tristearyl citrate, monolauryl citrate, dilauryl citrate, trilauryl citrate, monoprenyl citrate, diprenyl citrate, triprenyl citrate, monocyclohexyl citrate, dicyclohexyl citrate, tricyclohexyl citrate, monophenyl citrate, diphenyl citrate, triphenyl citrate.

According to further embodiments, the kinetic regulator is an ester of citric acid with a polyhydric alcohol. Such esters have of the following general structure (II): 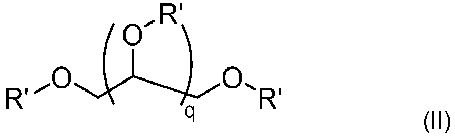
where q is an integer between 0 - 4, preferably 1 or 2, and
R' independently of one another are H, or C(O)-R"", or a moiety of general structure (III), with the provision that at least one of R' is a moiety of general structure (III), where Rʺʺ is an unbranched C2 - C30 alkyl chain or an unbranched C2 - C30 alkenyl chain, wherein the alkenyl chain may comprise between 1 - 6 double bonds, and where the general structure (III) is: 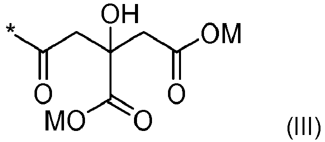
where each M independently of one another is H or an alkali metal or alkaline earth metal ion.

Suitable kinetic regulators of the general structure (II) are esters of citric acid with ethylene glycol, glycerol, or erythritol. Such esters can be mono-, di- or tri-esters of citric acid. Such esters can be monomeric, oligomeric, or polymeric.

It is possible within the present context, that the esters of citric acid with a polyhydric alcohol comprise additional ester groups formed with acids different from citric acid. Such acids especially are acetic acid, propionic acid, and fatty acids. Suitable kinetic regulators of the general structure (II) thus also include co-esters of ethylene glycol, glycerol, or erythritol with citric acid and at least one of acetic acid, propionic acid, and fatty acids.

According to especially preferred embodiments, the kinetic regulator is selected from mono- and/or diglycerides of citric acid. Mono- and/or diglycerides of citric acid have a chemical structure of the following general formula (IV). Accordingly, according to preferred embodiments, the kinetic regulator of the present invention has the general structure (IV): 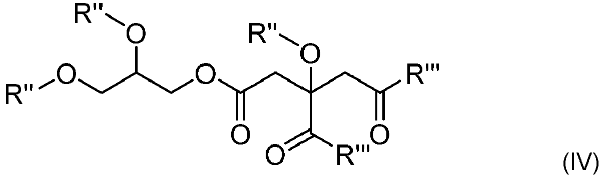 wherein
each R", independently of one another, is H or C(O)-Rʺʺ, with the provision that at least one R" is not H,
where Rʺʺ is an unbranched C2 - C30 alkyl chain or an unbranched C2 - C30 alkenyl chain, wherein the alkenyl chain may comprise between 1 - 6 double bonds, and
each R‴ independently of one another is OM with M being H or an alkali metal or alkaline earth metal ion, or a moiety of the following general structure (V), 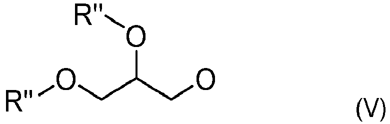
wherein
each R", independently of one another, is H or C(O)-Rʺʺ with Rʺʺ being an unbranched C2 - C30 alkyl chain or an unbranched C2 - C30 alkenyl chain, wherein the alkenyl chain may comprise between 1 - 6 double bonds.

The kinetic regulator of the present invention can be a monoglyceride of citric acid or a mixture of different monoglycerides of citric acid. The kinetic regulator of the present invention can be a diglyceride of citric acid or a mixture of different diglycerides of citric acid. The kinetic regulator of the present invention can also be a mixture of one or more monoglycerides and one or more diglycerides of citric acid. It is preferred that the kinetic regulator of the present invention is a mixture of mono- and diglycerides of citric acid.

Such mono- and/or diglycerides of citric acid are also known as Citrem. They are commercially available and commonly used in the food industry.

Moieties C(O)-Rʺʺ in the above general structures (IV) and (V) preferably are derived from fatty acids. Preferred fatty acids to be present as esters in general structures (IV) and (V) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

According to embodiments, the kinetic regulator is a tartaric acid ester. Especially, the kinetic regulator is an ester of tartaric acid with a polyhydric alcohol. Further preferred are mixed esters of tartaric acid and fatty acids with polyhydric alcohols.

According to embodiments, the kinetic regulator is an ester of tartaric acid according to the following general structure (VI) 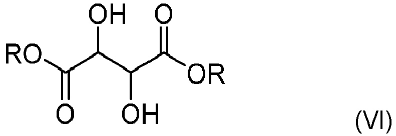 where each R, independently of one another, is H, or a branched or unbranched C2 - C30 alkyl chain, or a branched or unbranched C3 - C30 alkenyl chain, wherein the alkenyl chain may comprise between 1 - 6 double bonds, or a cyclohexyl group, or an aromatic group with 5 - 10 C atoms, with the provision that at least one of R is not H.

It has been found that kinetic regulators of the general structure (VI) and with at least one hydrophobic moiety R, are particularly suitable within the present context. Suitable kinetic regulators of the general structure (VI) are monobutyl tartrate, dibutyl tartrate, monopentyl tartrate, dipentyl tartrate, monohexyl tartrate, dihexyl tartrate, monooleyl tartrate, dioleyl tartrate, monostearyl tartrate, distearyl tartrate, monolauryl tartrate, dilauryl tartrate, monoprenyl tartrate, diprenyl tartrate, monocyclohexyl tartrate, dicyclohexyl tartrate, monophenyl tartrate, diphenyl tartrate.

According to further embodiments, the kinetic regulator is an ester of tartaric acid with a polyhydric alcohol. Such esters have of the following general structure (VII): 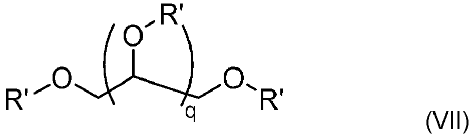
where q is an integer between 0 - 4, preferably 1 or 2, and
R' independently of one another are H, or C(O)-R"", or a moiety of general structure (VIII), with the provision that at least one of R' is a moiety of general structure (VIII), where Rʺʺ is an unbranched C2 - C30 alkyl chain or an unbranched C2 - C30 alkenyl chain, wherein the alkenyl chain may comprise between 1 - 6 double bonds, and where the general structure (VIII) is: 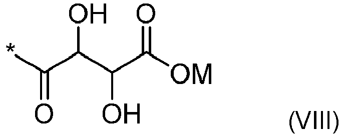
where each M independently of one another is H, or an alkali metal, or alkaline earth metal ion.

Suitable kinetic regulators of the general structure (VII) are esters of tartaric acid with ethylene glycol, glycerol, or erythritol. Such esters can be mono-, or di-esters of tartaric acid. Such esters can be monomeric, oligomeric, or polymeric.

It is possible within the present context, that the esters of tartaric acid with a polyhydric alcohol comprise additional ester groups formed with acids different from tartaric acid. Such acids especially are acetic acid, propionic acid, and fatty acids.

Suitable kinetic regulators of the general structure (VII) thus also include co-esters of ethylene glycol, glycerol, or erythritol with tartaric acid and at least one of acetic acid, propionic acid, and fatty acids.

According to especially preferred embodiments, the kinetic regulator is selected from mono- and/or diglycerides of tartaric acid. Mono- and/or diglycerides of tartaric acid have a chemical structure of the following general formula (IX). Accordingly, according to preferred embodiments, the kinetic regulator of the present invention has the general structure (IX): 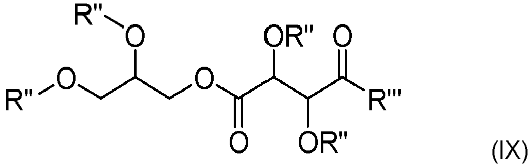 wherein
each R", independently of one another, is H or C(O)-Rʺʺ, with the provision that at least one R" is not H,
where Rʺʺ being an unbranched C2 - C30 alkyl chain or an unbranched C2 - C30 alkenyl chain, wherein the alkenyl chain may comprise between 1 - 6 double bonds, and
each R‴ independently of one another is OM with M being H or an alkali metal or alkaline earth metal ion, or a moiety of the following general structure (X), 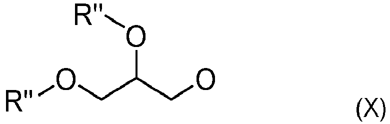
wherein
each R", independently of one another, is H or C(O)-Rʺʺ with Rʺʺ being an unbranched C2 - C30 alkyl chain or an unbranched C2 - C30 alkenyl chain, wherein the alkenyl chain may comprise between 1 - 6 double bonds.

The kinetic regulator of the present invention can be a monoglyceride of tartaric acid or a mixture of different monoglycerides of tartaric acid. The kinetic regulator of the present invention can be a diglyceride of tartaric acid or a mixture of different diglycerides of tartaric acid. The kinetic regulator of the present invention can also be a mixture of one or more monoglycerides and one or more diglycerides of tartaric acid. It is preferred that the kinetic regulator of the present invention is a mixture of mono- and diglycerides of tartaric acid.

Moieties C(O)-Rʺʺ in the above general structures (IX) and (X) preferably are derived from fatty acids. Preferred fatty acids to be present as esters in general structures (IX) and (X) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

Examples of preferred kinetic regulators are diacetylated mono- and diglycerides of tartaric acid.

According to embodiments, the kinetic regulator is a lactic acid ester. Especially, the kinetic regulator is an ester of lactic acid with a polyhydric alcohol. Further preferred are mixed esters of lactic acid and fatty acids with polyhydric alcohols.

According to embodiments, the kinetic regulator is an ester of lactic acid according to the following general structure (XI) 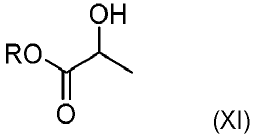 where R is a branched or unbranched C2 - C30 alkyl chain, or a branched or unbranched C3 - C30 alkenyl chain, wherein the alkenyl chain may comprise between 1 - 6 double bonds, or a cyclohexyl group, or an aromatic group with 5-10 C atoms.

Suitable kinetic regulators of the general structure (XI) are butyl lactate, pentyl lactate, hexyl lactate, oleyl lactate, stearyl lactate, lauryl lactate, prenyl lactate, cyclohexyl lactate, phenyl lactate.

According to further embodiments, the kinetic regulator is an ester of lactic acid with a polyhydric alcohol. Such esters have of the following general structure (XII): 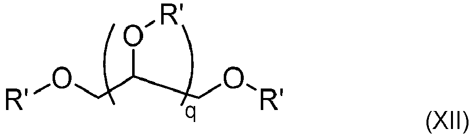
where q is an integer between 0 - 4, preferably 1 or 2, and
R' independently of one another are H, or C(O)-Rʺʺ, or a moiety of general structure (XIII), with the provision that at least one of R' is a moiety of general structure (XIII), where Rʺʺ is an unbranched C2 - C30 alkyl chain or an unbranched C2 - C30 alkenyl chain, wherein the alkenyl chain may comprise between 1 - 6 double bonds, and where the general structure (XIII) is:

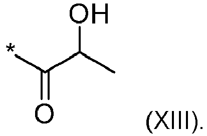

Suitable kinetic regulators of the general structure (XII) are esters of lactic acid with ethylene glycol, glycerol, or erythritol.

It is possible within the present context, that the esters of lactic acid with a polyhydric alcohol comprise additional ester groups formed with acids different from lactic acid. Such acids especially are acetic acid, propionic acid, and fatty acids. Suitable kinetic regulators of the general structure (XII) thus also include co-esters of ethylene glycol, glycerol, or erythritol with lactic acid and at least one of acetic acid, propionic acid, and fatty acids.

According to especially preferred embodiments, the kinetic regulator is selected from monoglycerides of lactic acid. Monoglycerides of lactic acid have a chemical structure of the following general formula (XIV). Accordingly, according to preferred embodiments, the kinetic regulator of the present invention has the general structure (XIV): 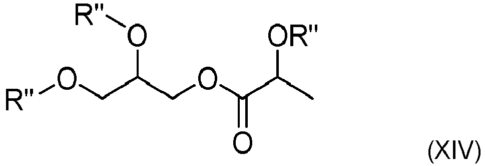 wherein
each R", independently of one another, is H or C(O)-Rʺʺ, with the provision that at least one R" is not H,
where Rʺʺ being an unbranched C2 - C30 alkyl chain or an unbranched C2 - C30 alkenyl chain, wherein the alkenyl chain may comprise between 1 - 6 double bonds.

The kinetic regulator of the present invention can be a monoglyceride of lactic acid or a mixture of different monoglycerides of lactic acid.

Moieties C(O)-Rʺʺ in the above general structure (XIV) preferably are derived from fatty acids. Preferred fatty acids to be present as esters in general structure (XIV) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

According to embodiments, the kinetic regulator is a gluconic acid ester. Especially, the kinetic regulator is an ester of gluconic acid with a polyhydric alcohol. Further preferred are mixed esters of gluconic acid and fatty acids with polyhydric alcohols.

According to embodiments, the kinetic regulator is an ester of gluconic acid according to the following general structure (XV) 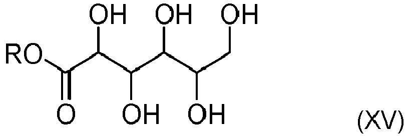 where R is a branched or unbranched C2 - C30 alkyl chain, or a branched or unbranched C3 - C30 alkenyl chain, wherein the alkenyl chain may comprise between 1 - 6 double bonds, or a cyclohexyl group, or an aromatic group with 5-10 C atoms.

Suitable kinetic regulators of the general structure (XV) are butyl gluconate, pentyl gluconate, hexyl gluconate, oleyl gluconate, stearyl gluconate, lauryl gluconate, prenyl gluconate, cyclohexyl gluconate, phenyl gluconate.

According to further embodiments, the kinetic regulator is an ester of gluconic acid with a polyhydric alcohol. Such esters have of the following general structure (XVI): 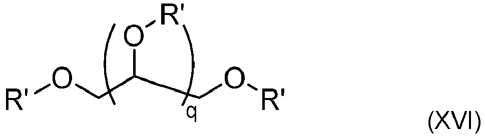
where q is an integer between 0 - 4, preferably 1 or 2, and
R' independently of one another are H, or C(O)-Rʺʺ, or a moiety of general structure (XVII), with the provision that at least one of R' is a moiety of general structure (XVII), where Rʺʺ is an unbranched C2 - C30 alkyl chain or an unbranched C2 - C30 alkenyl chain, wherein the alkenyl chain may comprise between 1 - 6 double bonds, and where the general structure (XVII) is:

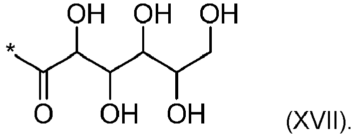

Suitable kinetic regulators of the general structure (XVI) are esters of gluconic acid with ethylene glycol, glycerol, or erythritol.

It is possible within the present context, that the esters of gluconic acid with a polyhydric alcohol comprise additional ester groups formed with acids different from gluconic acid. Such acids especially are acetic acid, propionic acid, and fatty acids. Suitable kinetic regulators of the general structure (XVI) thus also include co-esters of ethylene glycol, glycerol, or erythritol with gluconic acid and at least one of acetic acid, propionic acid, and fatty acids.

According to especially preferred embodiments, the kinetic regulator is selected from monoglycerides of gluconic acid. Monoglycerides of gluconic acid have a chemical structure of the following general formula (XVIII). Accordingly, according to preferred embodiments, the kinetic regulator of the present invention has the general structure (XVIII): 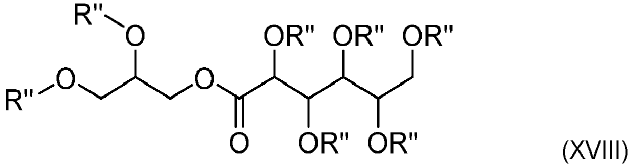 wherein
each R", independently of one another, is H or C(O)-Rʺʺ, with the provision that at least one R" is not H,
where Rʺʺ being an unbranched C2 - C30 alkyl chain or an unbranched C2 - C30 alkenyl chain, wherein the alkenyl chain may comprise between 1 - 6 double bonds.

The kinetic regulator of the present invention can be a monoglyceride of gluconic acid or a mixture of different monoglycerides of gluconic acid.

Moieties C(O)-Rʺʺ in the above general structure (XVIII) preferably are derived from fatty acids. Preferred fatty acids to be present as esters in general structure (XVIII) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

According to embodiments, the kinetic regulator is a malic acid ester. Especially, the kinetic regulator is an ester of malic acid with a polyhydric alcohol. Further preferred are mixed esters of malic acid and fatty acids with polyhydric alcohols.

According to embodiments, the kinetic regulator is an ester of malic acid according to the following general structure (IXX) 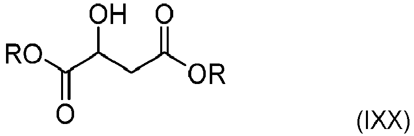 where each R, independently of one another, is H, or a branched or unbranched C2 - C30 alkyl chain, or a branched or unbranched C3 - C30 alkenyl chain, wherein the alkenyl chain may comprise between 1 - 6 double bonds, or a cyclohexyl group, or an aromatic group with 5 - 10 C atoms, with the provision that at least one of R is not H.

It has been found that kinetic regulators of the general structure (IXX) and with at least one hydrophobic moiety R, are particularly suitable within the present context. Suitable kinetic regulators of the general structure (IXX) are monobutyl malate, dibutyl malate, monopentyl malate, dipentyl malate, monohexyl malate, dihexyl malate, monooleyl malate, dioleyl malate, monostearyl malate, distearyl malate, monolauryl malate, dilauryl malate, monoprenyl malate, diprenyl malate, monocyclohexyl malate, dicyclohexyl malate, monophenyl malate, diphenyl malate.

According to further embodiments, the kinetic regulator is an ester of malic acid with a polyhydric alcohol. Such esters have of the following general structure (XX): 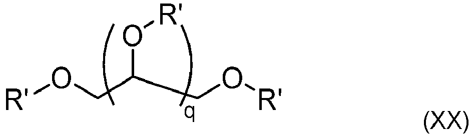
where q is an integer between 0 - 4, preferably 1 or 2, and
R' independently of one another are H, or C(O)-Rʺʺ, or a moiety of general structure (XXIa) or (XXIb), with the provision that at least one of R' is a moiety of general structure (XXIa) or (XXIb), where Rʺʺ is an unbranched C2 - C30 alkyl chain or an unbranched C2 - C30 alkenyl chain, wherein the alkenyl chain may comprise between 1 - 6 double bonds, and where the general structure (XXIa) and (XXIb) are: 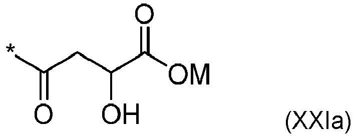 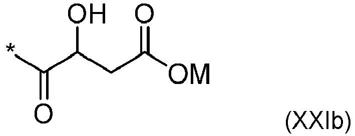
where each M independently of one another is H, or an alkali metal, or alkaline earth metal ion.

Suitable kinetic regulators of the general structure (XX) are esters of malic acid with ethylene glycol, glycerol, or erythritol. Such esters can be mono-, or di-esters of malic acid. Such esters can be monomeric, oligomeric, or polymeric.

It is possible within the present context, that the esters of malic acid with a polyhydric alcohol comprise additional ester groups formed with acids different from malic acid. Such acids especially are acetic acid, propionic acid, and fatty acids. Suitable kinetic regulators of the general structure (XX) thus also include co-esters of ethylene glycol, glycerol, or erythritol with malic acid and at least one of acetic acid, propionic acid, and fatty acids.

According to especially preferred embodiments, the kinetic regulator is selected from mono- and/or diglycerides of malic acid. Mono- and/or diglycerides of malic acid have a chemical structure of the following general formula (XXlla) or (XXllb). Accordingly, according to preferred embodiments, the kinetic regulator of the present invention has the general structure (XXlla) or (XXllb): 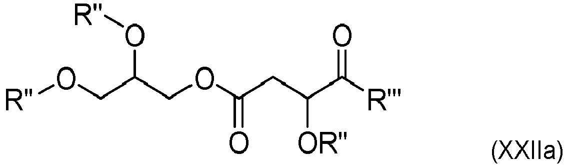 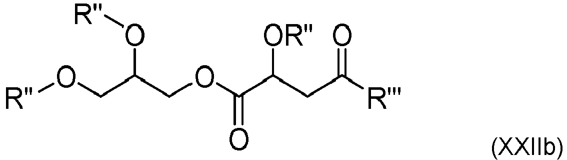 wherein
each R", independently of one another, is H or C(O)-Rʺʺ, with the provision that at least one R" is not H,
where Rʺʺ being an unbranched C2 - C30 alkyl chain or an unbranched C2 - C30 alkenyl chain, wherein the alkenyl chain may comprise between 1 - 6 double bonds, and
each R‴ independently of one another is OM with M being H or an alkali metal or alkaline earth metal ion, or a moiety of the following general structure (XXIII), 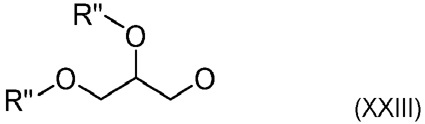
wherein
each R", independently of one another, is H or C(O)-Rʺʺ with Rʺʺ being an unbranched C2 - C30 alkyl chain or an unbranched C2 - C30 alkenyl chain, wherein the alkenyl chain may comprise between 1 - 6 double bonds.

The kinetic regulator of the present invention can be a monoglyceride of malic acid or a mixture of different monoglycerides of malic acid. The kinetic regulator of the present invention can be a diglyceride of malic acid or a mixture of different diglycerides of malic acid. The kinetic regulator of the present invention can also be a mixture of one or more monoglycerides and one or more diglycerides of malic acid. It is preferred that the kinetic regulator of the present invention is a mixture of mono- and diglycerides of malic acid.

Moieties C(O)-Rʺʺ in the above general structures (XXII) and (XXIII) preferably are derived from fatty acids. Preferred fatty acids to be present as esters in general structures (XXII) and (XXIII) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

According to embodiments, the kinetic regulator is a glycolic acid ester. Especially, the kinetic regulator is an ester of glycolic acid with a polyhydric alcohol. Further preferred are mixed esters of glycolic acid and fatty acids with polyhydric alcohols.

According to embodiments, the kinetic regulator is an ester of glycolic acid according to the following general structure (XXIV) 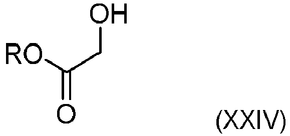 where R is a branched or unbranched C2 - C30 alkyl chain, or a branched or unbranched C3 - C30 alkenyl chain, wherein the alkenyl chain may comprise between 1 - 6 double bonds, or a cyclohexyl group, or an aromatic group with 5 - 10 C atoms.

Suitable kinetic regulators of the general structure (XXIV) are butyl glycolate, pentyl glycolate, hexyl glycolate, oleyl glycolate, stearyl glycolate, lauryl glycolate, prenyl glycolate, cyclohexyl glycolate, phenyl glycolate.

According to further embodiments, the kinetic regulator is an ester of glycolic acid with a polyhydric alcohol. Such esters have of the following general structure (XXV): 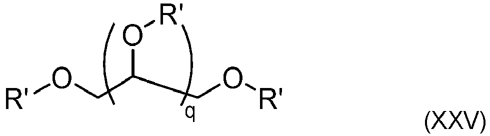
where q is an integer between 0 - 4, preferably 1 or 2, and
R' independently of one another are H, or C(O)-Rʺʺ, or a moiety of general structure (XXVI), with the provision that at least one of R' is a moiety of general structure (XXVI), where Rʺʺ is an unbranched C2 - C30 alkyl chain or an unbranched C2 - C30 alkenyl chain, wherein the alkenyl chain may comprise between 1 - 6 double bonds, and where the general structure (XXVI) is:

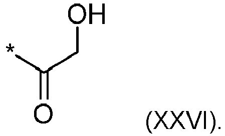

Suitable kinetic regulators of the general structure (XXV) are esters of glycolic acid with ethylene glycol, glycerol, or erythritol.

It is possible within the present context, that the esters of glycolic acid with a polyhydric alcohol comprise additional ester groups formed with acids different from glycolic acid. Such acids especially are acetic acid, propionic acid, and fatty acids. Suitable kinetic regulators of the general structure (XXV) thus also include co-esters of ethylene glycol, glycerol, or erythritol with glycolic acid and at least one of acetic acid, propionic acid, and fatty acids.

According to especially preferred embodiments, the kinetic regulator is selected from monoglycerides of glycolic acid. Monoglycerides of glycolic acid have a chemical structure of the following general formula (XXVII). Accordingly, according to preferred embodiments, the kinetic regulator of the present invention has the general structure (XXVII): 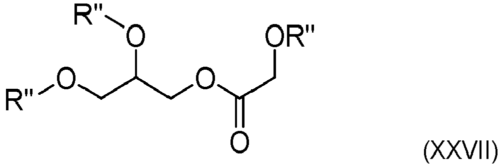 wherein
each R", independently of one another, is H or C(O)-Rʺʺ, with the provision that at least one R" is not H,
where Rʺʺ being an unbranched C2 - C30 alkyl chain or an unbranched C2 - C30 alkenyl chain, wherein the alkenyl chain may comprise between 1 - 6 double bonds.

The kinetic regulator of the present invention can be a monoglyceride of glycolic acid or a mixture of different monoglycerides of glycolic acid.

Moieties C(O)-Rʺʺ in the above general structure (XXVII) preferably are derived from fatty acids. Preferred fatty acids to be present as esters in general structure (XXVII) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

According to embodiments, the kinetic regulator is a mandelic acid ester. Especially, the kinetic regulator is an ester of mandelic acid with a polyhydric alcohol. Further preferred are mixed esters of mandelic acid and fatty acids with polyhydric alcohols.

According to embodiments, the kinetic regulator is an ester of mandelic acid according to the following general structure (XXVIII) 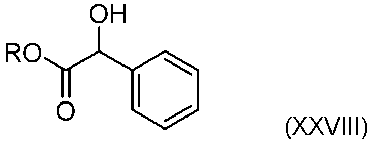 where R is a branched or unbranched C2 - C30 alkyl chain, or a branched or unbranched C3 - C30 alkenyl chain, wherein the alkenyl chain may comprise between 1 - 6 double bonds, or a cyclohexyl group, or an aromatic group with 5 - 10 C atoms.

Suitable kinetic regulators of the general structure (XXVIII) are butyl mandelate, pentyl mandelate, hexyl mandelate, oleyl mandelate, stearyl mandelate, lauryl mandelate, prenyl mandelate, cyclohexyl mandelate, phenyl mandelate.

According to further embodiments, the kinetic regulator is an ester of mandelic acid with a polyhydric alcohol. Such esters have of the following general structure (XXIX): 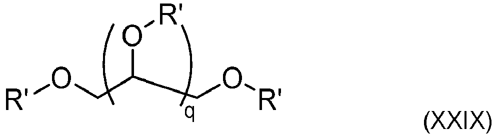
where q is an integer between 0 - 4, preferably 1 or 2, and
R' independently of one another are H, or C(O)-Rʺʺ, or a moiety of general structure (XXX), with the provision that at least one of R' is a moiety of general structure (XXX), where Rʺʺ is an unbranched C2 - C30 alkyl chain or an unbranched C2 - C30 alkenyl chain, wherein the alkenyl chain may comprise between 1 - 6 double bonds, and where the general structure (XXX) is:

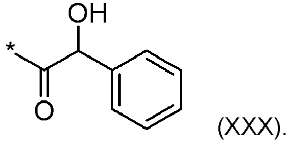

Suitable kinetic regulators of the general structure (XXIX) are esters of mandelic acid with ethylene glycol, glycerol, or erythritol.

It is possible within the present context, that the esters of mandelic acid with a polyhydric alcohol comprise additional ester groups formed with acids different from mandelic acid. Such acids especially are acetic acid, propionic acid, and fatty acids. Suitable kinetic regulators of the general structure (XXIX) thus also include co-esters of ethylene glycol, glycerol, or erythritol with mandelic acid and at least one of acetic acid, propionic acid, and fatty acids.

According to especially preferred embodiments, the kinetic regulator is selected from monoglycerides of mandelic acid. Monoglycerides of mandelic acid have a chemical structure of the following general formula (XXXI). Accordingly, according to preferred embodiments, the kinetic regulator of the present invention has the general structure (XXXI): 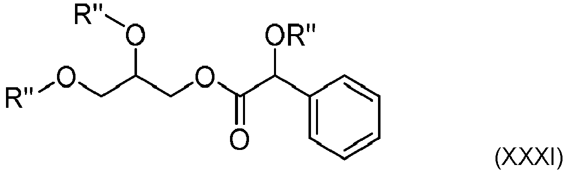 wherein
each R", independently of one another, is H or C(O)-Rʺʺ, with the provision that at least one R" is not H,
where Rʺʺ being an unbranched C2- C30 alkyl chain or an unbranched C2 - C30 alkenyl chain, wherein the alkenyl chain may comprise between 1 - 6 double bonds.

The kinetic regulator of the present invention can be a monoglyceride of mandelic acid or a mixture of different monoglycerides of mandelic acid.

Moieties C(O)-Rʺʺ in the above general structure (XXXI) preferably are derived from fatty acids. Preferred fatty acids to be present as esters in general structure (XXXI) are caprylic acid, capric acid, lauric acid, myristic acid, palmitic acid, stearic acid, arachidic acid, behenic acid, lignoceric acid, cerotic acid, myristoleic acid, palmitoleic acid, sapienic acid, oleic acid, elaidic acid, vaccenic acid, linoleic acid, linoelaidic acid, linolenic acid, arachidonic acid, eicosapentaeinoic acid, erucic acid, and docosahexanoic acid.

According to embodiments, a kinetic regulator of the present invention may also be a mixture of two or more of citric acid esters, tartaric acid esters, lactic acid esters, gluconic acid esters, malic acid esters, glycolic acid esters, and/or mandelic acid esters. A mixture of two or more may also apply to esters of the same acid but which are different chemically.

Kinetic regulators of the present invention preferably are solids. According to embodiments, kinetic regulators of the present invention are solids with a particle size in the range of 0 - 2000 µm, preferably 250 - 1000 µm, more preferably 250 - 500 µm. It has been found that when kinetic regulators of too low particle size are used, the setting time, i.e. the open time of the mineral binder composition may be unduly prolonged. It has also been found that kinetic regulators with particle size higher than 2000 µm may lead to incomplete reaction of the kinetic regulators within the mineral binder composition and thus a lower efficiency.

Particle sizes can be measured by sieve analysis according to standard ASTM C136/C136M. The process separates fine particles from coarser particles by passing the material through a number of sieves of different mesh sizes. The material to be analyzed is vibrated through a series of sequentially decreasing sieves using a single, or combination of horizontal, vertical or rotational motion. As a result, the mass percentage of particles passing through a sieve of a given size is obtained. In the present context, where a range of particle sizes is given, the lower number refers to the sieve mesh size where >90 w%, preferably >99 w% of particles are retained, while the higher number refers to the sieve mesh size where > 90, preferably >99 w% of particles may still pass.

It is thus preferred, that the kinetic regulator present in an admixture of the present invention has a particle size as measured according to ASTM C136/C136M of 0 - 2000 µm, preferably 250 - 1000 µm, more preferably 250 - 500 µm.

Without wishing to be bound by theory, it is believed that esters of hydroxy carboxylic acids are slowly hydrolysed in the alkaline environment of a mineral binder mixed with water. Hydroxy carboxylic acids are slowly released and act as retarders for mineral binder hydration, hardening, and/or drying.

According to embodiments, the kinetic regulator is comprised in the wet cementitious composition in an amount of 0.01 - 10 w%, preferably 0.05 - 5 w%, more preferably 0.1 - 2 w%, still more preferably 0.25 - 1.5 w%, relative to the total weight of the binder.

According to embodiments the binder is present in the dry cementitious composition in an amount of 5 - 95 w%, preferably 10 - 60 w%, relative to the total weight of the dry cementitious composition, and a kinetic regulator is used in an amount of 0.01 - 10 w%, preferably 0.05 - 5 w%, more preferably 0.1 - 2 w%, still more preferably 0.25 - 1.5 w%, relative to the total weight of the binder.

It is possible to mix a dry cementitious composition and a kinetic regulator of the present invention to prepare a dry premix and further mix said dry premix with water to obtain a wet cementitious composition. Thus, the kinetic regulator can be mixed with the dry cementitious composition to prepare and dry mix. Especially, the kinetic regulator is admixed to the dry cementitious composition during preparation of said dry cementitious composition. Very preferably, the dry premix is itself a dry cementitious composition. Admixing is possible by means typically applied for the dry or wet mixing of mortars and concrete. According to preferred embodiments, the dry cementitious composition and the kinetic regulator are premixed to prepare a dry premix, which dry premix is subsequently bagged, stored, and transported to a construction site, and where the dry premix is mixed with water at the construction site to prepare a wet cementitious composition.

The kinetic regulator can be interground with the binder selected from hydraulic cement, pozzolane, and/or latent hydraulic material. The kinetic regulator is thus mixed with other constituents of the dry cementitious composition together with the binder. Intergrinding is possible by means typically applied for the dry grinding of cement, especially by means of a ball mill or a roller mill.

According to embodiments, the dry cementitious composition comprises cement which is interground with the kinetic regulator.

It is likewise possible to mix a dry cementitious composition and a kinetic regulator of the present invention and water to prepare a wet cementitious composition. Especially, in this case, the kinetic regulator is not part of the dry cementitious composition. Mixing can especially be done at a construction site. It is particularly preferred, in this case, that the kinetic regulator is added to the dry cementitious composition together with the mixing water, preferably in the form of an aqueous solution or dispersion. The kinetic regulator may additionally or alternatively be added before and/or shortly after the mixing water.

A dry cementitious composition of the present invention may additionally comprise at least one accelerator. It is also possible that the at least one accelerator is added at a construction site, especially together with the mixing water.

According to embodiments, in a method of the present invention, a dry cementitious composition additionally comprises at least one accelerator or at least one accelerator is additionally added together with the mixing water, wherein the at least one accelerator is selected from alkali metal or alkaline earth metal hydroxides, nitrates, nitrites, thiocyanates, chlorides, carbonates, bicarbonates, or silicates, or aluminum salts, preferably sodium silicate, sodium thiocyanate, sodium carbonate, sodium bicarbonate, calcium hydroxide, calcium chloride, calcium nitrate, calcium nitrite, or aluminum sulfate.

According to embodiments, the at least one accelerator is comprised in an amount of 0.01 - 5 w%, preferably 0.1 - 4 w%, more preferably 0.2 - 3 w%, relative to the total weight of the binder.

Combinations of a kinetic regulator and an accelerator as described above are particularly useful to control or balance the heat flow from a cementitious composition while at the same time increasing the early strength, in particular the early flexural strength.

A particularly suitable dry cementitious composition comprises cement, especially Portland cement, a kinetic regulator which is a mixture of mono- and diglycerides of citric acid, and an accelerator which is calcium nitrate.

A particularly suitable dry cementitious composition comprises cement, especially Portland cement, a kinetic regulator which is citric acid and an accelerator which is calcium nitrate.

It is possible that the dry cementitious composition further comprises aggregate, fillers, and/or admixtures, which admixtures are chemically different from the kinetic regulator and the accelerator as defined above.

Aggregates can be any aggregate typically used for construction materials. Typical aggregates are for example rock, crushed stone, such as crushed limestone, gravel, sand, especially quartz sand, river sand and/or manufactured sand. Aggregates may also be bio-based aggregates such as for example hemp fibers. Suitable crushed stone and/or sand within the present context may have a particle size of between 0.063 - 4 mm. Suitable gravel may have a particle size between 8 - 32 mm. However, other particle sizes are also possible. Particle sizes can be measured by sieve analysis according to standard DIN EN 933-1:2012-03. Suitable aggregates are for example described in standard EN 12620:2013. Of course, a mixture of aggregates is possible.

It is particularly preferred that the dry cementitious composition of the present invention is a dry mortar. In particular, the dry cementitious composition is not concrete. Mortar comprises aggregate of a smaller particle size as compared to concrete. According to embodiments, the dry cementitious composition of the present invention comprises aggregate and at least 90 w%, preferably at least 98 w%, especially 100 w%, of all aggregate comprised has a maximum particle size of 4 mm, preferably of 3 mm, especially of 2 mm. Especially, the maximum particle size of the aggregate is determined according to DIN EN 933-1:2012-03.

Admixtures which are chemically different from the kinetic regulator and the accelerator as defined above can be any admixtures common to the mortar and concrete industry. Especially the admixtures can be selected from plasticizers, superplasticizers, shrinkage reducers, air entrainers, de-aerating agents, stabilizers, viscosity modifiers, thickeners, water reducers, retarders, water resisting agents, fibers, blowing agents, defoamers, redispersible polymer powders, dedusting agents, chromate reducers, pigments, biocides, corrosion inhibitors, and steel passivating agents, provided that these admixtures are chemically different from the kinetic regulator and the accelerator as defined above. Of course, a mixture of two or more of these additives is also possible.

Ways to mix the dry cementitious composition and kinetic regulator or the dry premix with water to obtain a wet cementitious composition are not particularly limited. For example, the dry cementitious composition can be provided to a mixing aggregate, kinetic regulator and water added, and mixing done until a homogeneous wet cementitious composition is obtained. Suitable mixing aggregates include, but are not limited to hand held agitator, Hobart mixer, portable concrete mixer, mixing truck, mixing bucket, paddle mixer, jet mixer, screw mixer, auger mixer, horizontal single shaft mixer, twin shaft paddle mixer, vertical shaft mixer, ribbon blender, orbiting mixer, change-can mixer, tumbling vessel, vertical agitated chamber or air agitated operations. Mixing can be continuously, semi-continuously or batch-wise.

The amount of water added may vary widely. It is, for example, possible to add water in an amount to realize a mass ratio of water to dry cementitious composition or dry premix of between 0.1 - 1.0. A higher amount of water will lead to a more flowable mixture and a lower amount of water to a pastier mixture.

Application of the wet cementitious composition in a method of the present invention can be done for example by way of brushing, rolling, troweling, spraying, pouring, or dispensing.

In particular, in a method for additive manufacturing, the wet cementitious composition can be applied by way dispensing from an automated dispenser such as a 3D printer.

The term "layer thickness" is the thickness of one continuous layer of the wet cementitious composition. The layer thickness is the length determined at right angle and in straight line from the surface to which the wet cementitious composition is applied to the interface of the wet cementitious composition with any other material, for example air, brick, cured concrete, sealing sheets, coatings. In case where there is more than one possible way to measure the layer thickness, the layer thickness always relates to the highest length determined.

In case where the wet cementitious composition is applied in several layers wet-in-wet, the layer thickness is meant to be the total thickness of all layers. In other words, in case of wet-in-wet application of more than one layer of wet cementitious composition, the layer thickness relates to the sum of individual layer thicknesses. The term wet-in-wet relates to the situation where a second layer is applied on top of a first layer, while the first layer has not yet reached the end of its setting time. In case of wet cementitious compositions, the setting time can be measured according to standard EN 196-3:2017-03 or ASTM C191-21.

Preferably, the layer thickness is not higher than 80 cm, especially not higher than 50 cm or not higher than 30 cm. According to embodiments, the layer thickness can be between 5-80 cm, preferably 7.5 - 50 cm, more preferably 8-50 cm, still more preferably 10 - 50 cm, still more preferably 15 - 50 cm, especially 20 - 50 cm.

The surface to which the wet cementitious composition is applied is not particularly limited. The surface may be porous or non-porous. The surface may be dry or wet. Preferably, the surface is capable to bear the load of the wet cementitious composition applied. Preferably, the surface is a construction material. In case of reactive construction material, the surface is at least partially cured, preferably essentially fully cured. The surface can for example be cured concrete, masonry, screed, cured plaster, plasterboard, cardboard, wood, asphalt, or soil.

In a second aspect the present invention relates to a kit of parts consisting of
(a) a cementitious composition comprising
(a1) at least one cement,
(a2) at least one kinetic regulator selected from hydroxy carboxylic acid and their derivatives, especially esters of hydroxy carboxylic acid,
(a3) aggregates,
(a4) optionally further additives, and
(a5) optionally water, and
(b) instructions to use the cementitious composition for applications with a layer thickness of the cementitious composition of at least 5 cm, preferably at least 7.5 cm, more preferably at least 8 cm, still more preferably at least 10 cm, still more preferably at least 15 cm, especially at least 20 cm.

Likewise, the present invention relates to a kit of parts consisting of
(a) a cementitious composition comprising
(a1) at least one cement,
(a3) aggregates,
(a4) optionally further additives, and
(a5) optionally water,
(b) at least one kinetic regulator selected from hydroxy carboxylic acid and their derivatives, especially esters of hydroxy carboxylic acid, and
(c) instructions to use the cementitious composition for applications with a layer thickness of the cementitious composition of at least 5 cm, preferably at least 7.5 cm, more preferably at least 8 cm, still more preferably at least 10 cm, still more preferably at least 15 cm, especially at least 20 cm.

All features and embodiments escribed above also apply to this aspect.

According to embodiments, the at least one cement is present in a cementitious composition of the present invention in an amount of 50 - 1200 kg/m³, preferably 100 - 900 kg/m³, still more preferably 300 - 900 kg/m³. The kinetic regulator is present in an amount of 0.01 - 10 w%, preferably 0.05 - 5 w%, more preferably 0.1 - 2 w%, still more preferably 0.25 - 1.5 w%, in each case relative to the total dry weight of cement. Aggregates are optionally present in an amount of 500 - 3500 kg/m³, preferably 800 - 3000 kg/m³. Further additives are optionally present in an amount of 0.1 - 10 w%, relative to the total dry weight of cement. Water is optionally present in a weight ratio of water to cement of 0.1 - 1.0, preferably 0.2 - 0.6, more preferably 0.25-0.5.

According to further embodiments, the at least one cement is present in a cementitious composition of the present invention in an amount of 5 - 95 w%, preferably 10 - 60 w%, relative to the total dry weight of the cementitious composition. The kinetic regulator is present in an amount of 0.01 - 10 w%, preferably 0.05 - 5 w%, more preferably 0.1 - 2 w%, still more preferably 0.25 - 1.5 w%, in each case relative to the total dry weight of cement. Aggregates are present in an amount of 5 - 85 w%, preferably 20 - 80 w% relative to the total dry weight of the cementitious composition. Further additives are optionally present in an amount of 0.1 - 10 w%, relative to the total dry weight of cement. Water is optionally present in a weight ratio of water to powder of 0.1 - 0.6, preferably 0.2 - 0.5.

According to further embodiments, the at least one cement is present in a cementitious composition of the present invention in an amount of 20 - 75 w%, preferably 30 - 50 w% relative to the total dry weight of the cementitious composition. The kinetic regulator is present in an amount of 0.01 - 10 w%, preferably 0.05 - 5 w%, more preferably 0.1 - 2 w%, still more preferably 0.25 - 1.5 w%, in each case relative to the total dry weight of cement. Aggregates are present in an amount of 24 - 75 w%, preferably 30 - 60 w% relative to the total dry weight of the cementitious composition. Further additives are optionally present in an amount of 0.1 - 10 w%, relative to the total dry weight of cement. Water is optionally present in a weight ratio of water to powder of 0.1 - 0.6, preferably 0.2 - 0.5.

The cementitious composition of the present invention can be a dry cementitious composition or dry premix. A dry cementitious composition or dry premix means that the amount of water present in such a composition is below 5 w%, preferably below 1 w%, relative to the total weight. A dry cementitious composition or dry premix can be a cement, a dry mortar, or a dry concrete. The cementitious composition of the present invention may also contain water. The cementitious composition may thus also be a wet cementitious composition. A wet cementitious composition can be a mortar, a grout, a screed, an adhesive, a levelling compound, or a concrete. A wet cementitious composition of the present invention is obtained by mixing a dry cementitious composition or dry premix with water. Such mixing is especially done prior to the application of the cementitious composition. Curing of the cementitious composition will start upon mixing with water. According to embodiments, the amount of water to be added to a dry cementitious composition or dry premix of the present invention is such that a weight ratio of water to cement of between 0.1 - 1.0, preferably 0.2 - 0.6, more preferably 0.25 - 0.5 results.

A preferred cementitious composition of the present invention consists of
a) at least one cement selected from Portland cement, calcium aluminate cement, and/or calcium sulphoaluminate cement, preferably of Portland cement,
b) at least one kinetic regulator selected from mono and/or diglycerides of citric acid of the general structure (IV) in an amount of 0.01 - 10 w%, preferably 0.05 - 5 w%, more preferably 0.1 - 2 w%, still more preferably 0.25 - 1.5 w%, relative to the total dry weight of cement, and
c) optionally 0.01 - 5 w%, preferably 0.1 - 4 w%, more preferably 0.2 - 3 w%, relative to the total dry weight of cement, of at least one accelerator selected from alkali metal or alkaline earth metal hydroxides, nitrates, nitrites, thiocyanates, chlorides, carbonates, bicarbonates, or silicates, or aluminum salts, preferably sodium silicate, sodium thiocyanate, sodium carbonate, sodium bicarbonate, calcium hydroxide, calcium chloride, calcium nitrate, calcium nitrite, or aluminum sulfate.

Another preferred cementitious composition of the present invention comprises or essentially consists of
a) 5 - 95 w%, relative to the total dry weight of the cementitious composition, of at least one cement selected from Portland cement, calcium aluminate cement, and/or calcium sulphoaluminate cement, preferably of Portland cement,
b) at least one kinetic regulator selected from mono and/or diglycerides of citric acid of the general structure (IV) in an amount of 0.01 - 10 w%, preferably 0.05 - 5 w%, more preferably 0.1 - 2 w%, still more preferably 0.25 - 1.5 w%, relative to the total dry weight of cement,
c) optionally 5 - 95 w%, relative to the total dry weight of the cementitious composition, of sand and/or gravel,
d1) optionally 0.01 - 3 w%, relative to the total dry weight of cement, of at least one plasticizer or superplasticizer,
d2) optionally 0.01 - 5 w%, preferably 0.1 - 4 w%, more preferably 0.2 - 3 w%, relative to the total dry weight of cement, of at least one accelerator selected from alkali metal or alkaline earth metal hydroxides, nitrates, nitrites, thiocyanates, chlorides, carbonates, bicarbonates, or silicates, or aluminum salts, preferably sodium silicate, sodium thiocyanate, sodium carbonate, sodium bicarbonate, calcium hydroxide, calcium chloride, calcium nitrate, calcium nitrite, or aluminum sulfate, and
e) optionally water in a weight ratio of water to cement of between 0.1 - 1.0, preferably 0.2 - 0.6, more preferably 0.25 - 0.5.

### Figures

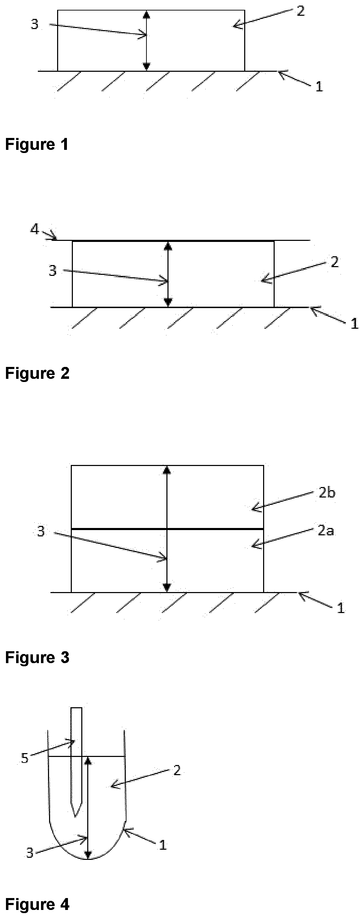

- Figure 1: Figure 1 shows the layer thickness (3) in a situation where a layer of wet cementitious composition (2) has been applied to a substrate (1).
- Figure 2: Figure 2 shows the layer thickness (3) in a situation where a layer of wet cementitious composition (2) has been applied to a substrate (1) and covered with a further material (4), for example a coating.
- Figure 3: Figure 3 shows the layer thickness (3) in a situation where two layers of wet cementitious composition (2a, 2b) have been applied wet-in-wet to a substrate (1).
- Figure 4: Figure 4 shows the layer thickness (3) in a situation where a layer of wet cementitious composition (2) has been applied into a crevice of a substrate (1) and where an anchoring element (5), for example a screw, has been additionally introduced into the crevice.

### Examples

### Example 1 - grouting composition

A dry cementitious composition for grouting was prepared by mixing 25 w% Portland cement (CEM I 52.5.R), 74 w% silica sand (0.1 - 2 mm), and 1 w% of additives (plasticizer, defoamer, shrinkage reducing agent) in a mixer bowl at low speed until visually homogeneous. Water was added thereto in an amount to realize a mass ratio of water to cement of 0.5. The respective amount of the kinetic regulator as indicated in below table 1 (w% rel. to cement) was added together with the water. Mixing was then continued at high speed for 30 seconds, then walls of the mixing bowl were scrapped down, and mixing continued for another 90 seconds. A wet cementitious composition as obtained.

Heat flow curves on the grouting mortars obtained were measured in an isothermal process as described in standard ASTM C1702-17 using an instrument i-CAL 8000 from Calmetrix. The wet cementitious composition was applied in the measurement cell with a layer thickness of 5 cm. The maximum heat flow reported in below tables is the global maximum of the heat flow curve, the heat flow at 40 h after mixing with water is given in below tables, the open time given in below tables is the time where the heat flow curve starts to increase. For the determination of maximum heat flow and open time, the initial peak in heat flow, encountered within the first appr. 5 minutes after mixing, is disregarded because this heat flow is more related to the mixing process.

Flexural strength and compressive strength were measured according to standard EN 196-1:2005-05 after the time indicated in below table 1.

**Table 1: Examples 1-1, 1-2 (not inventive) and 1-3 (inventive)**

| **Example** | **1-1** | **1-2** | **1-3** |
|---|---|---|---|
| Kinetic regulator | none | 0.25 w% TKPP* | 0.9 w% R-1 ** |
| Max. heat flow [mW/g] | 4.1 | 4.4 | 3.1 |
| Heat flow at 40 h [mW/g] | 0.3 | 0.3 | 0.3 |
| Open time [h] | 8 | 8 | 12 |
| Compressive strength @ 1d [Mpa] | 64.8 | 62.4 | 52.1 |
| Compressive strength @ 2d [Mpa] | 73.2 | 74.8 | 69.5 |
| Compressive strength @ 28d [Mpa] | 99.0 | 99.1 | 92.7 |
| Flexural strength @ 1d [Mpa] | 6.3 | 7.2 | 5.9 |
| Flexural strength @ 2d [Mpa] | 12.8 | 11.3 | 11.6 |
| Flexural strength @ 28d [Mpa] | 13.0 | 13.0 | 12.1 |

| | | | |
|---|---|---|---|
| * TKPP: tetrapotassium pyrophosphate ** R-1: citric acid ester of mono- and diglycerides (also known as E472c emulsifier) | | | |

### Example 2 - repair composition

A dry cementitious composition for repair was prepare by mixing 33 w% Portland cement (CEM I 42.5.R), 63 w% silica sand (0.063 - 2 mm), 2 w% redispersible polymer powder, and 2 w% of additives (plasticizer, thickener, defoamer, shrinkage reducing agent) in a mixer bowl at low speed until visually homogeneous. Water was added in an amount to realize a mass ratio of water to cement of 0.5. The respective amount of the kinetic regulator as indicated in below table 2 (w% rel. to cement) was added together with the water. Mixing was then continued at high speed for 30 seconds, then walls of the mixing bowl were scrapped down, and mixing continued for another 90 seconds.

Measurements were done as described in example 1.

**Table 2: Examples 2-1, 2-2 (not inventive) and 2-3, 2-4 (inventive)**

| **Example** | **2-1** | **2-2** | **2-3** | **2-4** |
|---|---|---|---|---|
| Kinetic regulator | none | 0.25 w% TKPP* | 0.9 w% R-1** | 1.5 w% R-1 ** |
| Max. heat flow [mW/g] | 20 | 23 | 19 | 15 |
| Heat flow at 4 h [mW/g] | 1.5 | 0.9 | 1.5 | 2.5 |
| Open time [min] | 15 | 15 | 15 | 15 |
| Compressive strength @ 1d [Mpa] | 40.7 | 43.0 | 39.4 | 34.4 |
| Compressive strength @ 2d [Mpa] | 58.6 | 59.4 | 55.2 | 53.9 |
| Compressive strength @ 28d [Mpa] | 82.7 | 85.5 | 82.3 | 78.7 |
| Flexural strength @ 1d [Mpa] | 5.1 | 5.6 | 5.5 | 4.8 |
| Flexural strength @ 2d [Mpa] | 10.3 | 10.0 | 8.9 | 9.3 |
| Flexural strength @ 28d [Mpa] | 11.2 | 11.6 | 11.3 | n.m. |

| | | | | |
|---|---|---|---|---|
| * TKPP: tetrapotassium pyrophosphate ** R-1: citric acid ester of mono- and diglycerides (also known as E472c emulsifier) n.m.: not measured | | | | |

## Claims

1. A method for the application of cementitious compositions, said method comprising the steps of
(i) providing a dry cementitious composition comprising at least one binder,
(ii) providing a kinetic regulator selected from hydroxy carboxylic acids and their derivatives, especially esters of hydroxy carboxylic acids,
(iii) providing mixing water,
(iv) mixing said dry cementitious composition, said kinetic regulator, and water to obtain a wet cementitious composition,
or mixing said dry cementitious composition and said kinetic regulator to prepare a dry premix and mixing said dry premix with water to obtain a wet cementitious composition,
(v) applying said wet cementitious composition to a surface in an amount sufficient to create a layer with thickness of at least 5 cm, preferably at least 7.5 cm, more preferably at least 8 cm, still more preferably at least 10 cm, still more preferably at least 15 cm, especially at least 20 cm, and
(vi) optionally curing the applied wet cementitious composition.

2. The method as claimed in claim 1, wherein in step (iv) said kinetic regulator is added to said dry cementitious composition together with the mixing water, preferably in the form of an aqueous solution or dispersion.

3. The method as claimed in at least one of the previous claims, **characterized in that** the kinetic regulator is selected from citric acid, citric acid esters, tartaric acid esters, lactic acid esters, gluconic acid esters, malic acid esters, glycolic acid esters, and/or mandelic acid esters.

4. The method as claimed in at least one of the previous claims, **characterized in that** the kinetic regulator is comprised in the wet cementitious composition in an amount of 0.01 - 10 w%, preferably 0.05 - 5 w%, more preferably 0.1-2 w%, still more preferably 0.25 - 1.5 w%, relative to the total weight of the binder.

5. The method as claimed in at least one of the previous claims, **characterized in that** the binder is selected from hydraulic cement, pozzolane, and/or latent hydraulic material.

6. The method as claimed in at least one of the previous claims, **characterized in that** the binder is present in the dry cementitious composition in an amount of 5 - 95 w%, preferably 10 - 60 w%, relative to the total weight of the dry cementitious composition, and a kinetic regulator is used in an amount of 0.01 - 10 w%, preferably 0.05 - 5 w%, more preferably 0.1 - 2 w%, still more preferably 0.25 - 1.5 w%, relative to the total weight of the binder.

7. The method as claimed in at least one of the previous claims, **characterized in that** the dry cementitious composition comprises Portland cement.

8. The method as claimed in at least one of the previous claims, **characterized in that** the dry cementitious composition comprises cement which is interground with the kinetic regulator.

9. The method as claimed in at least one of the previous claims, **characterized in that** the dry cementitious composition additionally comprises at least one accelerator or at least one accelerator is additionally added together with the mixing water, wherein the at least one accelerator is selected from alkali metal or alkaline earth metal hydroxides, nitrates, nitrites, thiocyanates, chlorides, carbonates, bicarbonates, or silicates, or aluminum salts, preferably sodium silicate, sodium thiocyanate, sodium carbonate, sodium bicarbonate, calcium hydroxide, calcium chloride, calcium nitrate, calcium nitrite, or aluminum sulfate.

10. The method as claimed in claim 9, **characterized in that** the at least one accelerator is comprised in an amount of 0.01 - 5 w%, preferably 0.1 - 4 w%, more preferably 0.2 - 3 w%, relative to the total weight of the binder.

11. The method as claimed in at least one of the previous claims, **characterized in that** the dry cementitious composition comprises aggregate and at least 90 w%, preferably at least 98 w%, especially 100 w%, of all aggregate comprised has a maximum particle size of 4 mm, preferably of 3 mm, especially of 2 mm.

12. The method as claimed in at least one of the previous claims, **characterized in that** the method is for repair, grouting, joining, levelling, rendering, anchoring, additive manufacturing, or casting of construction elements.

13. A kit of parts consisting of
(a) a cementitious composition comprising
(a1) at least one cement,
(a2) at least one kinetic regulator selected from hydroxy carboxylic acid and their derivatives, especially esters of hydroxy carboxylic acid,
(a3) aggregates,
(a4) optionally further additives, and
(a5) optionally water, and
(b) instructions to use the cementitious composition for applications with a layer thickness of the cementitious composition of at least 5 cm, preferably at least 7.5 cm, more preferably at least 8 cm, still more preferably at least 10 cm, still more preferably at least 15 cm, especially at least 20 cm.
